# EUROPEAN PATENT SPECIFICATION

(11) **EP 1 892 279 B1**
(45) Date of publication and mention of the grant of the patent: **26.01.2011**
(21) Application number: 06731470.8
(22) Date of filing: 04.04.2006
(51) Int. Cl.: C09K 11/59, C09K 11/66, H01L 33/00

(54) **PHOSPHOR, PHOSPHOR PASTE AND LIGHT-EMITTING DEVICE**
LEUCHTSTOFF, LEUCHTSTOFFPASTE UND LICHTEMITTIERENDE VORRICHTUNG
PHOSPHORE, PATE DE PHOSPHORE ET DISPOSITIF EMETTANT DE LA LUMIERE

(30) Priority: 07.04.2005 JP 2005110696; 28.04.2005 JP 2005131384
(43) Date of publication of application: 27.02.2008
(73) Proprietor: Sumitomo Chemical Company, Limited, Tokyo 104-8260 (JP)
(72) Inventor: KUZE, Satoru, 3050821 (JP); EZUHARA, Takayoshi, 3050821 (JP); IMANARI, Yuichiro, 3050005 (JP); MIYAZAKI, Susumu, 3001525 (JP)
(74) Representative: Lips, Hendrik Jan George
(86) International application number: PCT/JP2006/307523
(87) International publication number: WO 2006/109759

(56) References cited:
- EP-A- 1 353 354
- EP-A- 1 484 803
- WO-A1-03/069686
- JP-A- 2003 132 803
- US-A1- 2003 085 853
- LIN Y. ET AL.: 'Luminescence of Eu2+ and Dy3+ activated R3MgSi208-based (R=Ca, Sr, Ba) phosphors' JOURNAL OF ALLOYS AND COMPOUNDS vol. 348, no. 1-2, 2003, pages 76 - 79, XP004396793

## Description

### TECHNICAL FIELD

The present invention relates to a phosphor, a phosphor paste and a light emitting device.

### BACKGROUND ART

Phosphors are used for electron beam excited light-emitting devices such as cathode ray tube (CRT), field emission display (FED), and surface-conduction electron-emitter display (SED); ultraviolet excited light-emitting devices such as backlight for a liquid crystal display, three band fluorescent lamp, and high-load fluorescent lamp; and vacuum ultraviolet excited light-emitting devices such as plasma display panel (PDP) and rare gas lamp. Electron beam excited light-emitting devices, ultraviolet excited light-emitting devices and vacuum ultraviolet excited light-emitting devices each include a substrate; a phosphor layer; and an excitation source for exciting the phosphor layer to emit light, and for example the phosphor layer is formed by mixing a phosphor, an organic binder and a solvent to obtain a phosphor paste, applying the phosphor paste onto the substrate, and heat-treating the substrate at a high temperature (for example, 500°C).

As the phosphors, various compounds such as Me₃MgSi₂O₈: Eu [Me is an alkaline earth metal] are known (JP 2004-026922).

EP 1 353 354 discloses europium doped phosphors of the type Me₃MgSi₂O₈:Eu wherein Me is at least one of Ba, Sr, Ba or mixtures therof and their application in plasma display panels.

However, from the viewpoint of performance improvement of the light emitting device, phosphors with improved emission properties (for example, phosphors show sufficient brightness and low brightness degradation when a phosphor layer is formed by heat treatment).

### DISCLOSURE OF THE INVENTION

An object of the present invention is to provide a phosphor that shows sufficient brightness and low brightness degradation when a phosphor layer is formed by heat treatment. Another object of the present invention is to provide a phosphor paste for forming a phosphor layer with a high brightness, and to provide a light emitting device with high brightness.

The present inventors have conducted diligent studies on phosphors, and have eventually accomplished the present invention.

The present invention provides a phosphor according to claim 1.

The present invention provides a phosphor paste comprising the above phosphor.

Furthermore, the present invention provides a light emitting device comprising the above phosphor.

### BRIEF DESCRIPTION OF THE DRAWINGS

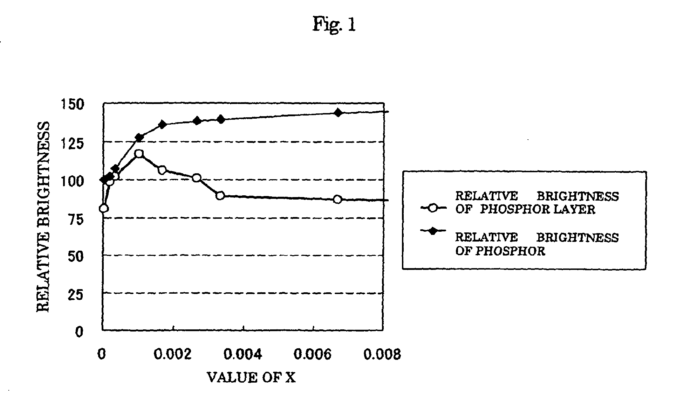

FIG. 1 shows a relationship between relative brightnesses of the phosphors 1 to 5 and 8 to 10, and Eu content in each phosphor [i.e., the value of x in the formula (1)] (○: the relative brightness of each phosphor layer, •: the relative brightness of each phosphor).

### MODE FOR CARRYING OUT THE INVENTION

### PHOSPHOR

A phosphor of the present invention includes a compound according to claim 1.

The phosphor may further include aluminum (Al), scandium (Sc), yttrium (Y), lanthanum (La), gadolinium (Gd), cerium (Ce), praseodymium (Pr), neodymium (Nd), samarium (Sm), terbium (Tb), dysprosium (Dy), holmium (Ho), erbium (Er), thulium (Tm), ytterbium (Yb), lutetium (Lu), bismuth (Bi) or manganese (Mn). The phosphor may include a single one of these elements, or two or more of these elements. The content of these elements in the phosphor is usually not less than about 100 ppm by weight, and not more than about 50000 ppm by weight.

The phosphor of the present invention may be produced by calcining a mixture of metal compounds, which is converted into a phosphor including the compound according to claim 1 and the above activator by calcination; for example, weighting the metal compounds to obtain the mixture satisfying the molar ratio of the metal elements within the phosphor, and calcining the mixture.

The metal compounds are compounds of Ca, Sr, Ba, Mg, Zn, Si, Ge, Eu, Al, Sc, Y, La, Gd, Ce, Pr, Nd, Sm, Tb, Dy, Ho, Er, Tm, Yb, Lu, Bi, or Mn; for example, the metal compound may be an oxide, or a compound such as hydroxide, carbonate, nitrate, halide or oxalate which is decomposed to become an oxide at a high temperature. Instead of adding a halide as a flux as described later, metal halide, preferably metal fluoride or metal chloride, may be used as the metal compound.

The phosphor may be produced by calcining a mixture of metal compounds which is converted into the compound according to claim 1 by calcination; for example, the phosphor may be produced by weighing and mixing metal compounds so as to obtain a mixture of metal compounds in which the ratio of the metal elements is similar to that of the metal elements in the phosphor, and calcining the mixture of the metal compounds. For example, the compound represented by the formula: (Ba_{0.495}Sr_{2.5}Eu_{0.005})MgSi₂O₈ may be produced by weighing and mixing BaCO₃, SrCO₃, MgO, SiO₂ and Eu₂O₃ so as to obtain a mixture of the metal compounds in which the molar ratio of Ba: Sr: Mg: Si: Eu is 0.495: 2.5: 1.0: 2.0: 0.005, and calcining the mixture of the metal compounds.

A compound not according to the invention represented by Sr_{2.895}Ca_{0.1}EU_{0.005}MgSi₂O₈ may be produced by weighing and mixing SrCO₃, CaCO₃, MgO, SiO₂ and Eu₂O₃ so as to obtain a mixture of the metal compounds in which the molar ratio of Sr: Ca: Mg: Si: Eu is 2.895: 0.1: 1.0: 2.0: 0.005, and by calcining the mixture of the metal compounds.

Furthermore, the compound represented by Ba_{0.995}Sr₂Eu_{0.005}MgSi₂O₈ may be produced by weighing and mixing BaCO₃, SrCO₃, MgO, SiO₂ and Eu₂O₃ so as to obtain a mixture of the metal compounds in which the molar ratio of Ba: Sr: Mg: Si: Eu is 0.995: 2.0: 1.0: 2.0: 0.005, and calcining the mixture of the metal compounds.

The mixing may be carried out using an apparatus such as ball mill, V-shaped mixer or agitator. When a mixture of the metal compounds contains metal hydroxide, metal carbonate, metal nitrate, metal halide or metal oxalate, which is decomposed or oxidized at a high temperature to become an oxide, the mixture may be pre-calcined prior to calcination. The pre-calcination may be carried out at a temperature of not lower than about 400°C and lower than about 1200°C, preferably lower than 1100°C, and the pre-calcination may be carried out under any of inert gas atmosphere, oxidizing atmosphere and reduction atmosphere. Furthermore, the pre-calcined mixture may be pulverized.

For example, the calcination may be carried out under the following conditions of
calcination temperature: not lower than about 900°C, preferably not lower than about 1100°C, and not higher than about 1500°C, preferably not higher than about 1400°C;
retention time at the calcination temperature: not les than about 0.5 hours, and not more than about 100 hours; and
calcination atmosphere: reduction gas such as nitrogen containing about 0.1 to about 10 % by volume of hydrogen, or argon containing about 0.1 to about 10 % by volume of hydrogen.

In the present method, carbon may be added to a mixture of the metal compounds prior to the calcination. Due to the addition of carbon, the calcination is carried out under a stronger reduction atmosphere. Furthermore, a flux may be added to a mixture of the metal compounds prior to the calcination. Due to the addition of a flux, a phosphor having a high crystallinity or a large average particle diameter is obtained. Examples of the flux include LiF, NaF, KF, LiCl, NaCl, KCl, Li₂CO₃, Na₂CO₃, K₂CO₃, NaHCO₃, NH₄Cl, NH₄I, MgF₂, CaF₂, SrF₂, BaF₂, MgCl₂, CaCl₂, SrCl₂, BaCl₂, MgI₂, CaI₂, SrI₂, and BaI₂. The calcination may usually be carried out once, but may alternatively be carried out twice or more.

The phosphor may be pulverized, washed or classified. The pulverization and/or classification may be carried out using an apparatus capable of adjusting the particle size of the phosphor, and the pulverization may be carried out using ball mill or jet mill. The classification may be carried out using sieve or cyclone.

The above phosphor emits blue light with sufficient brightness under irradiation of electron beam, ultraviolet or vacuum ultraviolet, and when a phosphor layer is formed, there is obtained the phosphor layer that shows low brightness degradation and high brightness; therefore, the phosphor is suitably used for electron beam excited light-emitting devices such as CRT, FED and SED; ultraviolet excited light-emitting devices such as backlight for a liquid crystal display, three band fluorescent lamp, and high-load fluorescent lamp; and vacuum ultraviolet excited light-emitting devices such as PDP and rare gas lamp. Furthermore, since the phosphor shows sufficient brightness, it may also be used for a white LED.

### PHOSPHOR PASTE

A phosphor paste of the present invention includes the above phosphor, and usually includes the phosphor and an organic substance such as binder and solvent.

Examples of the binder include cellulosic resins ( ethyl cellulose, methyl cellulose, cellulose nitrate, cellulose acetate, cellulose propionate, hydroxypropyl cellulose, butyl cellulose, benzyl cellulose, modified cellulose, and the like); acrylic resins (at least one polymer made from monomers such as acrylic acid, methacrylic acid, methylacrylate, methylmethacrylate, ethylacrylate, ethylmethacrylate, propylacrylate, propylmethacrylate, isopropylacrylate, isopropylmethacrylate, n-butylacrylate, n-butylmethacrylate, tert-butylacrylate, tert-butylmethacrylate, 2-hydroxyethylacrylate, 2-hydroxyethylmethacrylate, 2-hydroxypropylacrylate, 2-hydroxypropylmethacrylate, benzylacrylate, benzylmethacrylate, phenoxyacrylate, phenoxymethacrylate, isobornylacrylate, isobornylmethacrylate, glycidylmethacrylate, styrene, α-methyl styrene acrylamide, methacrylamide, acrylonitrile, and methacrylonitrile); ethylene-vinyl acetate copolymer resin; polyvinyl butyral; polyvinyl alcohol; propylene glycol; polyethylene oxide; urethane resin; melamine resin; and phenol resin.

The binder has an amount of usually not less than about 0.01 parts by weight, preferably not less than about 0.1 parts by weight, more preferably not less than 1 parts by weight, and usually not more than about 100 parts by weight, preferably not more than about 80 parts by weight, and more preferably not more than about 50 parts by weight based on 100 parts by weight of the phosphor,

Examples of the solvent include monohydric alcohols with high boiling point; polyhydric alcohols such as diol or triol, as typified by ethylene glycol and glycerol; compounds obtained by etherifying or esterifying alcohol (such as ethylene glycol monoalkyl ether, ethylene glycol alkyl ether, ethylene glycol alkyl ether acetate, diethylene glycol monoalkyl ether acetate, diethylene glycol dialkyl ether, propylene glycol monoalkyl ether, propylene glycol dialkyl ether, and propylene glycol alkyl acetate).

The solvent has an amount of usually not less than about 80 parts by weight, preferably not less than about 100 parts by weight, and usually not more than about 400 parts by weight, preferably not more than 300 parts by weight based on 100 parts by weight of the phosphor

The phosphor paste may include other phosphor. Examples of the other phosphor include red light-emitting phosphor, green light-emitting phosphor, and blue light-emitting phosphor other than the above phosphor.

The red light-emitting phosphor may be a phosphor which emits red under irradiation of light such as ultraviolet ray. Examples of the red light-emitting phosphor include trivalent europium activated yttrium oxide (Y₂O₃: Eu) and trivalent europium activated yttrium sulfide (Y₂O₂S: Eu).

The green light-emitting phosphor may be a phosphor which emits green under irradiation of the light. Examples thereof include cerium- and terbium-activated lanthanum phosphate (LaPO₄: Ce, Tb); terbium activated cerium·terbium·magnesium·aluminum ((Ce Tb)MgAl₁₁O₁₉: Tb); terbium activated yttrium borate (YBO₃: Tb); and manganese activated zinc silicate (Zn₂SiO₄: Mn).

The other blue light-emitting phosphor may be a phosphor which emits blue under irradiation of the light. Examples thereof include europium activated strontium phosphate Sr₅(PO₄)₃Cl: Eu; europium activated strontium·barium·calcium phosphate (Sr, Ca, Ba)₅(PO₄)₃Cl: Eu; and europium activated barium·magnesium·aluminum BaMg₂Al₁₆O₂₇: Eu, BaMgAl₁₀O₁₇: Eu.

The phosphor paste may be prepared, for example, according to a method of mixing a phosphor, a binder and a solvent as described in JP 10-255671. The mixing may be carried out using ball mill or three-roll mill.

The phosphor paste may be used for forming a phosphor layer showing high brightness.

The phosphor layer is formed by a method including the following steps of:
(i) applying the phosphor paste according to claim 3 to a substrate; and
(ii)heat-treating the resultant substrate.

The substrate may be made of glass or resin film. The substrate may be in the form of plate or container, or may be flexible.

The application may be carried out using screen printing or ink jet.

The heat treatment may be carried out under the conditions that an organic substance in the phosphor paste is volatilized, burned or decomposed, and the properties (e.g., emission performance) of the phosphor are not impaired. The substrate may be heated at usually from about 300°C to about 600°C. Subsequent to the application and prior to the heat treatment, the substrate may be dried at from room temperature (about 25°C) to about 300°C.

The phosphor paste provides a phosphor layer that shows high brightness under irradiation of electron beam, ultraviolet or vacuum ultraviolet, and is thus suitably used for an electron beam excited light-emitting device, an ultraviolet excited light-emitting device, and a vacuum ultraviolet excited light-emitting device.

### LIGHT EMITTING DEVICE

A light emitting device of the present invention includes the above phosphor, and usually includes the phosphor and an excitation source for exciting the phosphor.

Examples of the light emitting device include electron beam excited light-emitting devices such as CRT, FED or SED; ultraviolet excited light-emitting devices such as backlight for a liquid crystal display, three band fluorescent lamp and high-load fluorescent lamp; and vacuum ultraviolet excited light-emitting devices such as PDP or rare gas lamp, preferably vacuum ultraviolet excited light-emitting devices.

In the electron beam excited light-emitting devices, the excitation source is an electron gun or an electron emitter. In the ultraviolet excited light-emitting devices and the vacuum ultraviolet excited light-emitting devices, the excitation source is a discharge space to which a voltage is applied.

The high-load fluorescent lamp (e.g., small-size fluorescent lamp having high power consumption per unit area of lamp bulb wall) may be fabricated according to a method including the following steps of (a-1) to (a-7) as described in JP 10-251636.
(a-1) weighing a red light-emitting phosphor, a green light-emitting phosphor and the above blue light-emitting phosphor so as to adjust a desired color (for example, white) of a light emitting device, and mixing these phosphor with a solvent (for example, a polyethylene oxide aqueous solution) to obtain a coating mixture;
(a-2) applying the coating mixture to an inner face of a glass bulb;
(a-3) heat-treating the glass bulb at from about 300°C to about 600°C to form a phosphor layer;
(a-4) putting electrodes at ends of the glass bulb;
(a-5) evacuating the inside of the bulb, and enclosing a low pressure rare gas (such as Ar, Kr, or Ne) and mercury therein;
(a-6) sealing off an exhaust tube to form a discharge space; and
(a-7) putting caps on the bulb.

The ultraviolet excited light-emitting device other than the high-load fluorescent lamp ( backlight for a liquid crystal display and the like) may also similarly be fabricated according to a method described in JP 2005-068403.

The PDP may be fabricated according to a method including the following steps of (b-1) to (b-4) as described in JP 10-195428:
(b-1) mixing a phosphor, a binder and a solvent for each of a green light-emitting phosphor, a red light-emitting phosphor and the above blue light-emitting phosphor to obtain respective phosphor pastes;
(b-2) applying the blue light-emitting phosphor paste, the red light-emitting phosphor paste and the green light-emitting phosphor paste, respectively, (by a screen printing) to surface of a barrier rib and surface of a substrate which is the inner surface of a rear plate and is partitioned with the barrier rib, is provided with an address electrode, and is in the form of stripe, followed by calcination at from about 300 °C to about 600 °C to form phosphor layers;
(b-3) contacting the phosphor layers with a glass front plate provided with a transparent electrode and a bus electrode in a direction perpendicular to the phosphor layers and provided with a dielectric layer and a protection layer on an inner surface; and binding them,
(b-4) enclosing a space between the rear plate and the glass front plate, which is evacuated of air and filled with a low-pressure rare gas (for instance, Xe, Ne), to form a discharge space.

The rare gas lamp may be fabricated by carrying out the same operations as a conventional method except that the above phosphor pastes are used.

The FED may be fabricated according to a method including the following steps of (c-1) to (c-4) as described in JP 2002-138279.
(c-1) mixing a phosphor, a binder and a solvent for each of a green light-emitting phosphor, a red light-emitting phosphor and the above blue light-emitting phosphor to obtain phosphor pastes;
(c-2) applying the phosphor pastes to a glass substrate and drying the pastes to form the phosphor layers, respectively, to obtain a face plate;
(c-3) putting together, via a support frame, the face plate and a rear plate provided with a large number of electron emitters; and
(c-4) evacuating and sealing a space between the face plate and the rear plate.

The SED may be fabricated by the similar method to FED, for example, a method disclosed in paragraphs 0182 to 0189 of JP 2002-83537.

Furthermore, the light emitting device may be a white LED including a phosphor and an LED. The LED is an excitation source for the phosphor. Examples of the LED include ultraviolet LED for emitting light with a wavelength of 200 nm to 410 nm and blue LED for emitting light with a wavelength of 410 nm to 550 nm, preferably blue LED. Commercially available LEDs may be used.

The white LED may be fabricated, for example, by a method for mixing a phosphor with resin (transparent resin such as epoxy resin, polycarbonate and silicon rubber) to obtain a mixture in which the phosphor is dispersed in the resin, and packing an LED with the mixture (e.g. JP 05-152609, JP 07-99345), or a method for sealing an LED with resin (transparent resin such as epoxy resin) and fixing a phosphor thereon (e.g. JP 11-31845, JP 2002-226846).

### EXAMPLES

The following examples will illustrate the present invention more in detail, but do not limit the scope of the invention.

Preparation of phosphor paste: a phosphor paste was prepared by mixing 33 parts by weight of a phosphor, 7 parts by weight of ethyl cellulose, and 60 parts by weight of a mixture of diethylene glycol mono-n-butyl ether and diethylene glycol mono-n-butyl ether acetate.

Formation of phosphor layer: a phosphor layer with a thickness of about 20 µm was formed by applying a phosphor paste onto a glass substrate, drying the phosphor paste at 100°C, and then heat-treating at 500°C for 30 minutes in air.

Measurement of Brightness: emission brightness was measured using a spectroradiometer (SR-3, manufactured by Topcon Corporation) by placing a phosphor (or a glass substrate on which a phosphor layer was formed) in a vacuum chamber with a pressure of not more than 6. 7 Pa (5 x 10⁻² torr), and by irradiating a vacuum ultraviolet using a 146 nm lamp (type: H0012, manufactured by Ushio Inc.).

Composition Analysis of Phosphor: a phosphor composition was determined using a GD-MS analyzer (glow discharge mass spectrometer, manufactured by VG Elemental Co., trade name: VG9000).

### Reference 1

A barium carbonate (manufactured by Nippon Chemical Industrial Co., Ltd., purity: 99 % or more), a strontium carbonate (manufactured by Sakai Chemical Industry Co., Ltd., purity: 99% or more), a basic magnesium carbonate (manufactured by Kyowa Chemical Industry Co., Ltd., purity: 99 % or more), a silicon dioxide (manufactured by Nippon Aerosil Co., Ltd., purity: 99.99 %), and a europium oxide (manufactured by Shin-Etsu Chemical Co., Ltd., purity: 99.99%) were weighed and mixed for 4 hours using a dry ball mill to obtain a mixture in which the molar ratio of Ba: Sr: Mg: Si: Eu was 0.4999: 2.5: 1.0: 2.0: 0.0001. The mixture was put into an alumina boat, and was calcined at 1200°C for 2 hours under a reduction atmosphere containing a mixed gas of 98 % by volume of nitrogen and 2 % by volume of hydrogen to obtain a phosphor 1 consisting of a compound represented by (Ba_{0.4999}Sr_{2.5}Eu_{0.0001})MgSi₂O₈. The properties of the phosphor 1 were shown in Table 1.

### Example 1

Except that the molar ratio of Ba: Sr: Mg: Si: Eu was changed to 0.4995: 2.5: 1.0: 2.0: 0.0005, the same operations as those in Reference 1 were carried out to obtain a phosphor 2 consisting of a compound represented by (Ba_{0.4995}Sr_{2.5}Eu_{0.0005})MgSi₂O₈. The evaluation results of the phosphor 2 were shown in Table 1.

### Example 2

Except that the molar ratio of Ba: Sr: Mg: Si: Eu was changed to 0.499: 2.5: 1.0: 2.0: 0.001, the same operations as those in Reference 1 were carried out to obtain a phosphor 3. The properties of the phosphor 3 were shown in Table 1.

### Example 3

Except that the molar ratio of Ba: Sr: Mg: Si: Eu was changed to 0.497: 2.5: 1.0: 2.0: 0.003, the same operations as those in Reference 1 were carried out to obtain a phosphor 4. The properties of the phosphor 4 were shown in Table 1.

### Example 4

Except that the molar ratio of Ba: Sr: Mg: Si: Eu was changed to 0.495: 2.5: 1.0: 2.0: 0.005, the same operations as those in Reference 1 were carried out to obtain a phosphor 5. The properties of the phosphor 5 were shown in Table 1.

### Example 5

Except that the molar ratio of Ba: Sr: Mg: Si: Eu was changed to 0.495: 2.5: 1.05: 2.0: 0.005, the same operations as those in Reference 1 were carried out to obtain a phosphor 6. The properties of the phosphor 6 were shown in Table 1.

### Example 6

Except that the molar ratio of Ba: Sr: Mg: Si: Eu was changed to 0.495: 2.5: 0.98: 1.97: 0.005, the same operations as those in Reference 1 were carried out to obtain a phosphor 7. The properties of the phosphor 7 were shown in Table 1.

### Example 7

Except that the molar ratio of Ba: Sr: Mg: Si: Eu was changed to 0.492: 2.5: 1.0: 2.0: 0.008, the same operations as those in Reference 1 were carried out to obtain a phosphor 8. The properties of the phosphor 8 were shown in Table 1.

### Comparative Example 1

Except that the molar ratio of Ba: Sr: Mg: Si: Eu was changed to 0.49: 2.5: 1.0: 2.0: 0.01, the same operations as those in Reference 1 were carried out to obtain a phosphor 9. The properties of the phosphor 9 were shown in Table 1.

### Comparative Example 2

Except that the molar ratio of Ba: Sr: Mg: Si: Eu was changed to 0.48: 2.5: 1.0: 2.0: 0.02, the same operations as those in Reference 1 were carried out to obtain a phosphor 10. The properties of the phosphor 10 were shown in Table 1.

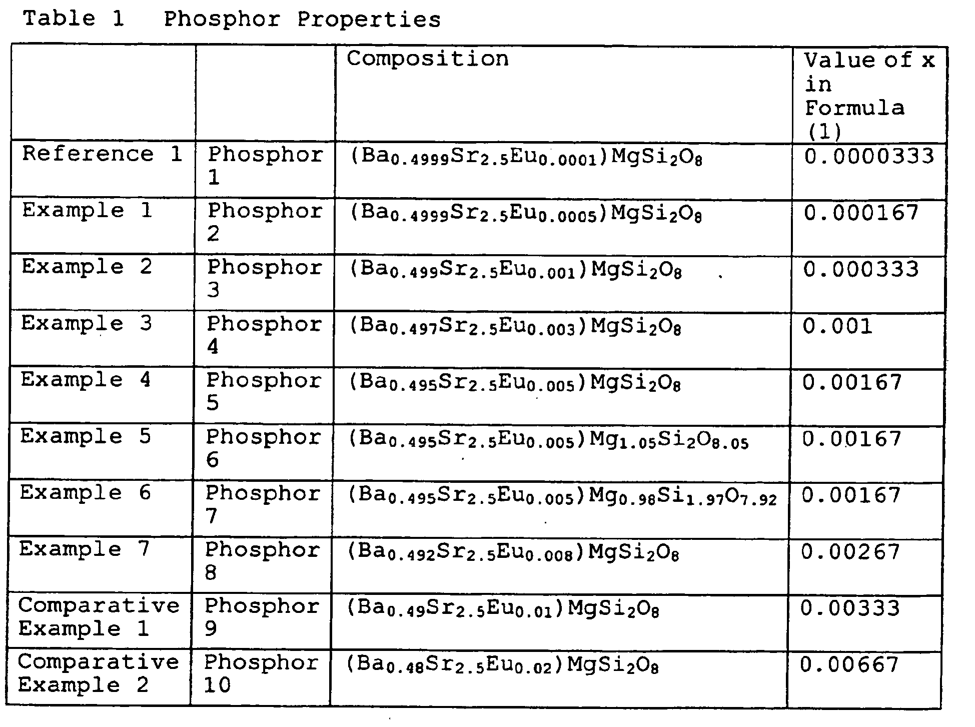

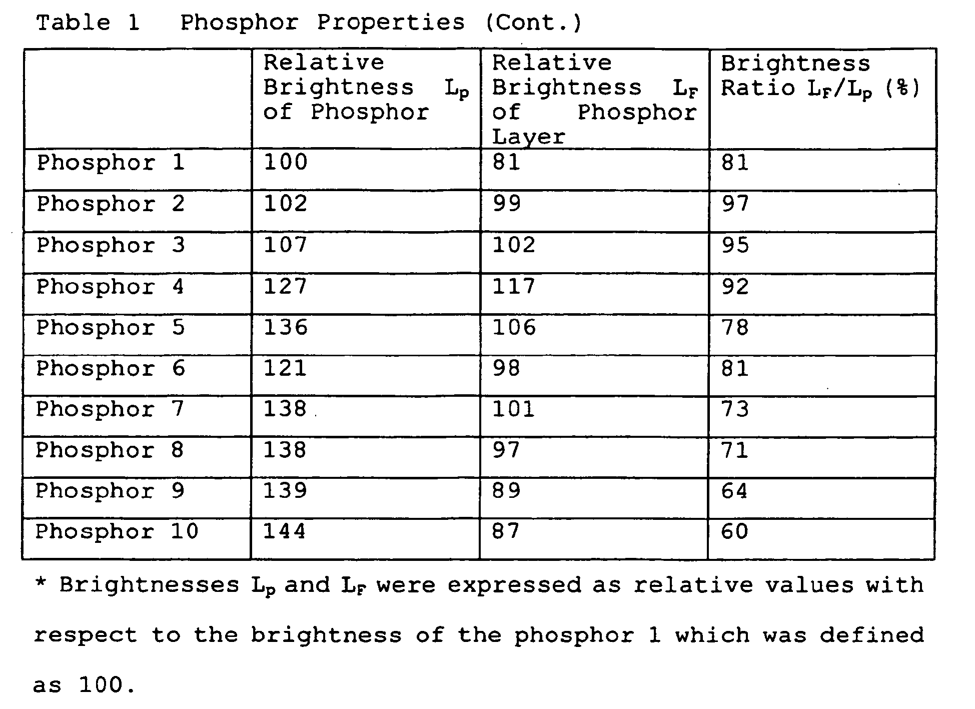

### Example 8 not according to the invention

A barium carbonate (manufactured by Nippon Chemical Industrial Co., Ltd., purity: 99 % or more), a calcium carbonate (manufactured by Ube Material Industries, Ltd., purity: 99.9%), a basic magnesium carbonate (manufactured by Kyowa Chemical Industry Co., Ltd., purity: 99 % or more), a silicon dioxide (manufactured by Nippon Aerosil Co., Ltd., purity: 99.99 %), and a europium oxide (manufactured by Shin-Etsu Chemical Co., Ltd., purity: 99.99 %) were weighed and mixed for 4 hours in a dry ball mill to obtain a mixture in which the molar ratio of Ba: Ca: Sr: Mg: Si: Eu was 0.995: 2.0: 0: 1.0: 2.0: 0.005. The mixture was put into an alumina boat, and was calcined at 1200°C for 2 hours under a reduction atmosphere containing a mixed gas of 98 % by volume of nitrogen and 2 % by volume of hydrogen to obtain a phosphor 11. The properties of the phosphor 11 were shown in Table 2.

### Example 9 not according to the invention

A barium carbonate (manufactured by Nippon Chemical Industrial Co., Ltd., purity: 99 % or more), a strontium carbonate (manufactured by Sakai Chemical Industry Co., Ltd., purity: 99 % or more), a basic magnesium carbonate (manufactured by Kyowa Chemical Industry Co., Ltd., purity: 99 % or more), a silicon dioxide (manufactured by Nippon Aerosil Co., Ltd., purity: 99.99 %), and a europium oxide (manufactured by Shin-Etsu Chemical Co. , Ltd., purity: 99.99 %) were weighed and mixed for 4 hours using a dry ball mill to obtain a mixture in which the molar ratio of Ba: Sr: Mg: Si: Eu was 0.995: 2.0: 1.0: 2.0: 0.005. The mixture was put into an alumina boat, and was calcined at 1200°C for 2 hours under a reduction atmosphere containing a mixed gas of 98 % by volume of nitrogen and 2 % by volume of hydrogen to obtain a phosphor 12. The properties of the phosphor 12 were shown in Table 2.

### Example 10 not according to the invention

A calcium carbonate (manufactured by Ube Material Industries, Ltd., purity: 99.9 %), a strontium carbonate (manufactured by Sakai Chemical Industry Co., Ltd. , purity: 99 % or more), a basic magnesium carbonate (manufactured by Kyowa Chemical Industry Co., Ltd., purity: 99 % or more), a silicon dioxide (manufactured by Nippon Aerosil Co., Ltd., purity: 99.99 %), and a europium oxide (manufactured by Shin-Etsu Chemical Co., Ltd., purity: 99.99 %) were weighed and mixed for 4 hours using a dry ball mill to obtain a mixture in which the molar ratio of Sr: Ca: Mg: Si: Eu was 2.895: 0.1: 1.0: 2.0: 0.005. The mixture was put into an alumina boat, was calcined at 1200°C for 2 hours under a reduction atmosphere containing a mixed gas of 98 % by volume of nitrogen and 2 % by volume of hydrogen to obtain a phosphor 13. The properties of the phosphor 13 were shown in Table 2.

### Example 11 not according to the invention

Except that the molar ratio of Ba: Ca: Mg: Si: Eu was changed to 2.895: 0.1: 1.0: 2.0: 0.005, the same operations as those in Example 8 were carried out to obtain a phosphor 14. The properties of the phosphor 14 were shown in Table 2.

### Example 12 not according to the invention

A barium carbonate (manufactured by Nippon Chemical Industrial Co., Ltd., purity: 99 % or more), a calcium carbonate (manufactured by Ube Material Industries, Ltd., purity: 99.9 %), a strontium carbonate (manufactured by Sakai Chemical Industry Co., Ltd., purity: 99 % or more), a basic magnesium carbonate (manufactured by Kyowa Chemical Industry Co., Ltd., purity: 99 % or more), a silicon dioxide (manufactured by Nippon Aerosil Co., Ltd., purity: 99.99 %), and a europium oxide (manufactured by Shin-Etsu Chemical Co., Ltd., purity: 99.99%) were weighed and mixed for 4 hours using a dry ball mill to obtain a mixture in which the molar ratio of Ba: Sr: Ca: Mg: Si: Eu was 0.395: 2.5: 0.1: 1.0: 2.0: 0.005. The mixture was put into an alumina boat, and was calcined at 1200°C for 2 hours under a reduction atmosphere containing a mixed gas of 98 % by volume of nitrogen and 2 % by volume of hydrogen to obtain a phosphor 15. The properties of the phosphor 15 were shown in Table 2.

### Example 13 not according to the invention

Except that the molar ratio of Ba: Sr: Ca: Mg: Si: Eu was changed to 0.295: 2.5: 0.2: 1.0: 2.0: 0.005, the same operations as those in Example 12 were carried out to obtain a phosphor 16.

### Example 14 not according to the invention

Except that the molar ratio of Ba: Sr: Ca: Mg: Si: Eu was changed to 0.495: 2.1: 0.4: 1.0: 2.0: 0.005, the same operations as those in Example 12 were carried out to obtain a phosphor 17.

### Example 15 not according to the invention

A barium carbonate (manufactured by Nippon Chemical Industrial Co., Ltd., purity: 99 % or more), a strontium chloride hexahydrate (manufactured by Sakai Chemical Industry Co., Ltd., purity: 99.9 %), a basic magnesium carbonate (manufactured by Kyowa Chemical Industry Co., Ltd., purity: 99 % or more), a silicon dioxide (manufactured by Nippon Aerosil Co. , Ltd., purity: 99.99 %), and a europium oxide (manufactured by Shin-Etsu Chemical Co., Ltd., purity: 99.99%) were weighed and mixed for 4 hours using a dry ball mill to obtain a mixture in which the molar ratio of Ba: Sr: Mg: Si: Eu was 0.495: 2.5: 1.0: 2.0: 0.005. The mixture was put into an alumina boat, and was calcined at 1200°C for 2 hours under a reduction atmosphere containing a mixed gas of 98 % by volume of nitrogen and 2 % by volume of hydrogen to obtain a phosphor 18. The properties of the phosphor 18 were shown in Table 2.

The phosphor 18 had a Cl content of 900 ppm based on the total weight thereof.

### Example 16 not according to the invention

A barium carbonate (manufactured by Nippon Chemical Industrial Co., Ltd., purity: 99 % or more), a strontium chloride hexahydrate (manufactured by Sakai Chemical Industry Co., Ltd., purity: 99.9 %), a basic magnesium carbonate (manufactured by Kyowa Chemical Industry Co. , Ltd., purity: 99 % or more), a silicon dioxide (manufactured by Nippon Aerosil Co. , Ltd., purity: 99.99 %), a europium oxide (manufactured by Shin-Etsu Chemical Co., Ltd., purity: 99.99 %), and an yttrium oxide (manufactured by Shin-Etsu Chemical Co., Ltd., purity: 99.99 %) were weighed and mixed for 4 hours using a dry ball mill to obtain a mixture in which the molar ratio of Ba: Sr: Mg: Si: Eu: Y was 0.495: 2.5: 1.0: 2.0: 0.005: 0.01. The mixture was put into an alumina boat, and was calcined at 1200°C for 2 hours under a reduction atmosphere containing a mixed gas of 98 % by volume of nitrogen and 2 % by volume of hydrogen to obtain a phosphor 19. The properties of the phosphor 19 were shown in Table 2.

The phosphor 19 had an Y content of 1800 ppm based on the total weight thereof.

### Example 17 not according to the invention

A barium carbonate (manufactured by Nippon Chemical Industrial Co., Ltd., purity: 99 % or more), a strontium chloride hexahydrate (manufactured by Sakai Chemical Industry Co., Ltd., purity: 99.9 %), a basic magnesium carbonate (manufactured by Kyowa Chemical Industry Co., Ltd., purity: 99 % or more), a silicon dioxide (manufactured by Nippon Aerosil Co. , Ltd., purity: 99.99 %), a europium oxide (manufactured by Shin-Etsu Chemical Co., Ltd., purity: 99.99%), and an aluminum hydroxide (manufactured by Sumitomo Chemical Co., Ltd., purity: 99 % or more) were weighed and mixed for 4 hours using a dry ball mill to obtain a mixture in which the molar ratio of Ba: Sr: Mg: Si: Eu: Al was 0.495: 2.5: 1.0: 2.0: 0.005: 0.02. The mixture was put into an alumina boat, and was calcined at 1200°C for 2 hours under a reduction atmosphere containing a mixed gas of 98 % by volume of nitrogen and 2 % by volume of hydrogen, thus obtaining a phosphor 20. The properties of the phosphor 20 were shown in Table 2.

The phosphor 20 had an Al content of 1100 ppm based on the total weight thereof.

**Table 2 Phosphor Properties**

| | | Compositions not according to the invention | Value of x in Formula (1) |
|---|---|---|---|
| Example 8 | Phosphor 11 | (Ba_{0.995}Ca₂Eu_{0.005})MgSi₂O₈ | 0.00167 |
| Example 9 | Phosphor 12 | (Ba_{0.995}Sr₂Eu_{0.005})MgSi₂O₈ | 0.00167 |
| Example 10 | Phosphor 13 | (Sr_{2.895}Ca_{0.1}Eu_{0.005})MgSi₂O₈ | 0.00167 |
| Example 11 | Phosphor 14 | (Ba_{2.895}Ca_{0.1}Eu_{0.005})MgSi₂O₈ | 0.00167 |
| Example 12 | Phosphor 15 | (Ba_{0.395}Sr_{2.5}Ca_{0.1}Eu_{0.005})MgSi₂O₈ | 0.00167 |
| Example 13 | Phosphor 16 | (Ba_{0.295}Sr_{2.5}Ca_{0.2}Eu_{0.005})MgSi₂O₈ | 0.00167 |
| Example 14 | Phosphor 17 | (Ba_{0.495}Sr_{2.1} Ca_{0.4}Eu_{0.005})MgSi₂O₈ | 0.00167 |
| Example 15 | Phosphor 18 | (Ba_{0.495}Sr_{2.5}Eu_{0.005})MgSi₂O₈ | 0.00167 |
| Example 16 | Phosphor 19 | (Ba_{0.495}Sr_{2.5}EU_{0.005})MgSi₂O₈(Y 1800ppm) | 0.00167 |
| Example 17 | Phosphor 20 | (Ba₀.₄₉₅Sr_{2.5}Eu_{0.005})MgSi₂O₈(Al 1100ppm | 0.00167 |

**Table 2 Phosphor Properties (Cont.)**

| | Relative Brightness Lₚ of Phosphor | Relative Brightness L_{F} of Phosphor Layer | Brightness Ratio L_{F}/Lₚ (%) |
|---|---|---|---|
| Phosphor 11 | 105 | 83 | 79 |
| Phosphor 12 | 129 | 104 | 81 |
| Phosphor 13 | 143 | 119 | 83 |
| Phosphor 14 | 138 | 106 | 77 |
| Phosphor 15 | 146 | 115 | 79 |
| Phosphor 16 | 131 | 111 | 85 |
| Phosphor 17 | 119 | 90 | 76 |
| Phosphor 18 | 149 | 138 | 93 |
| Phosphor 19 | 130 | 114 | 88 |
| Phosphor 20 | 108 | 92 | 85 |

| | | | |
|---|---|---|---|
| * Brightnesses Lₚ and L_{F} were expressed as relative values with respect to the brightness of the phosphor 1 which was defined as 100. | | | |

### INDUSTRIAL APPLICABILITY

The phosphor of the present invention shows sufficient brightness and provides a phosphor layer with a high brightness when the phosphor layer is formed by heat treatment, and is thus suitably used for an electron beam excited light-emitting device, an ultraviolet excited light-emitting device, and a vacuum ultraviolet excited light-emitting device.

## Claims

1. A phosphor comprising a compound represented by the formula (2):
(Ba₃₋ₐ₋₃ₓSrₐEu₃ₓ)MgSi₂O₈
wherein a and x satisfy the following relations: 1.5 ≤ a ≤ 2.7 and
0.00016 ≤ x < 0.003

2. A phosphor according to claim 1, further comprising at least one selected from the group consisting of Al, Sc, Y, La, Gd, Ce, Pr, Nd, Sm, Tb, Dy, Ho, Er, Tm, Yb, Lu, Bi and Mn.

3. A phosphor paste comprising the phosphor according to claim 1 or 2.

4. The phosphor paste according to claim 3, further comprising an organic binder and a solvent.

5. A method for forming a phosphor layer, comprising the steps of (i) and (ii):
(i) applying the phosphor paste as defined in claim 3 to a substrate; and
(ii) heat-treating the resultant substrate.

6. A light emitting device comprising the phosphor according to claim 1 or 2.

7. A light emitting device according to claim 6, further comprising an excitation source for the phosphor.

8. A light emitting device according to claim 6, wherein the light emitting device is selected from the group consisting of an electron beam excited light-emitting device, an ultraviolet excited light-emitting device, a vacuum ultraviolet excited light-emitting device, and a white LED.

## Patentansprüche

1. Ein Leuchtstoff, umfassend eine Verbindung der Formel (2):
(Ba₃₋ₐ₋₃ₓSrₐEu₃ₓ)MgSi₂O₈,
wobei a und x die folgenden Beziehungen erfüllen:
1,5 ≤ a ≤ 2,7 und
0,00016 ≤ x < 0,003

2. Ein Leuchtstoff nach Anspruch 1, weiter umfassend mindestens eines, ausgewählt aus der Gruppe bestehend aus Al, Sc, Y, La, Gd, Ce, Pr, Nd, Sm, Tb, Dy, Ho, Er, Tm, Yb, Lu, Bi und Mn.

3. Eine Leuchtstoffpaste, umfassend den Leuchtstoff nach Anspruch 1 oder 2.

4. Die Leuchtstoffpaste nach Anspruch 3, weiter umfassend ein organisches Bindemittel und ein Lösungsmittel.

5. Ein Verfahren zur Herstellung einer Leuchtstoffschicht, umfassend die Schritte (i) und (ii):
(i) Auftragen der wie in Anspruch 3 definierten Leuchtstoffpaste auf ein Substrat; und
(ii) Wärmebehandlung des resultierenden Substrats.

6. Eine lichtemittierende Vorrichtung, umfassend den Leuchtstoff nach Anspruch 1 oder 2.

7. Eine lichtemittierende Vorrichtung nach Anspruch 6, weiter umfassend eine Anregungsquelle für den Leuchtstoff.

8. Eine lichtemittierende Vorrichtung nach Anspruch 6, wobei die lichtemittierende Vorrichtung ausgewählt ist aus der Gruppe bestehend aus einer durch Elektronenstrahlen angeregten lichtemittierenden Vorrichtung, einer durch UV-Strahlen angeregten lichtemittierenden Vorrichtung, einer durch Vakuum-UV-Strahlen angeregten lichtemittierenden Vorrichtung und einer weißen LED.

## Revendications

1. Phosphore comprenant un composé représenté par la formule (2) :
(Ba₃₋ₐ₋₃ₓSrₐEu₃ₓ)MgSi₂O₈
où a et x satisfont les relations suivantes :
1,5 ≤ a ≤ 2,7 et
0,00016 ≤ x < 0,003

2. Phosphore selon la revendication 1 comprenant en outre au moins un choisi dans le groupe consistant en Al, Sc, Y, La, Gd, Ce, Pr, Nd, Sm, Tb, Dy, Ho, Er, Tm, Yb, Lu, Bi et Mn.

3. Pâte de phosphore comprenant le phosphore selon la revendication 1 ou 2.

4. Pâte de phosphore selon la revendication 3 comprenant en outre un liant organique et un solvant.

5. Procédé pour former une couche de phosphore comprenant les étapes de (i) et (ii) :
(i) appliquer la pâte de phosphore selon la revendication 3 à un substrat ; et
(ii) traiter thermiquement le substrat résultant.

6. Dispositif émetteur de lumière comprenant le phosphore selon la revendication 1 ou 2.

7. Dispositif émetteur de lumière selon la revendication 6 comprenant en outre une source d'excitation pour le phosphore.

8. Dispositif émetteur de lumière selon la revendication 6 où le dispositif émetteur de lumière est choisi dans le groupe consistant en un dispositif émetteur de lumière excité par un faisceau d'électrons, un dispositif émetteur de lumière excité par des ultraviolets, un dispositif émetteur de lumière excité par des ultraviolets sous vide et une DEL blanche.
